(19) Europäisches Patentamt
European Patent Office
Office européen des brevets

(11) Veröffentlichungsnummer: **0 321 460 B1**

(12) ## EUROPÄISCHE PATENTSCHRIFT

(45) Veröffentlichungstag der Patentschrift: **26.08.92**

(51) Int. Cl.⁵: **C04B 35/10**

(21) Anmeldenummer: **87904025.1**

(22) Anmeldetag: **24.06.87**

(86) Internationale Anmeldenummer:
**PCT/DE87/00285**

(87) Internationale Veröffentlichungsnummer:
**WO 88/01610 (10.03.88 88/06)**

(54) **ELEKTROCHEMISCH STABILE KERAMIK AUS ALUMINIUMOXID.**

(30) Priorität: **27.08.86 DE 3629100**

(43) Veröffentlichungstag der Anmeldung:
**28.06.89 Patentblatt 89/26**

(45) Bekanntmachung des Hinweises auf die
Patenterteilung:
**26.08.92 Patentblatt 92/35**

(84) Benannte Vertragsstaaten:
**DE FR GB IT**

(56) Entgegenhaltungen:
**EP-A- 0 190 768**
**FR-A- 2 256 121**
**GB-A- 2 108 949**
**US-A- 2 760 875**
**US-A- 2 887 394**

**Design Engineering, Nov. 1977, London, GB,
"Engineering ceramics - when to use them",
Seiten 79, 81, 82, siehe Seite 81, rechte Spalte, unten**

(73) Patentinhaber: **ROBERT BOSCH GMBH
Postfach 30 02 20
W-7000 Stuttgart 30(DE)**

(72) Erfinder: **FREY, Thomas
Herrnstra e 16
W-8500 Nürnberg(DE)**
Erfinder: **FRIESE, Karl-Hermann
Strogäustra e 13
W-7250 Leonberg(DE)**
Erfinder: **GEIER, Heinz
Bergheimer Weg 27
W-7016 Gerlingen(DE)**

Chemical abstracts, vol. 101, No.14, October 1984, ( Columbus, OhioUS), siehe Seite 286, Zusammenfassung 115749x, & JP, A, 5978926 (MITSUBISHI CHEMICAL INDUSTRIES CO., LTD) 8. Mai 1984

Advanced Ceramic, vol. 1, No. 1, Jan. 1986, ( Columbus, Ohio, US), W.A.Zdaniewski et al.:"Toughening of a sintered alumina by cristallization of the grain boundary phase" Seiten 99-103, siehe Seite 99, linke Spalte

## Beschreibung

Keramik-Bauelemente mit integrierten Heizleitern in Form von aus einem Cermet bestehenden aufgedruckten Mustern sind durch elektrochemische Zersetzung der Trägerkeramik, der keramischen Deckschicht und/oder des Keramik-Stützgerüstes gefährdet. Die elektrolytische Zersetzung wird durch Ionenleitung unter der anliegenden Heizspannung, die beispielsweise bei Kfz-Anwendungen unterhalb von 24 V Gleichspannung liegt, hervorgerufen und kann schließlich zur Zerstörung des Heizleiters aufgrund der Abscheidung von Kationen unter Legierungsbildung und/oder durch Abscheidung von Sauerstoff unter Oxidbildung bzw. durch Rißbildung aufgrund des unter der Isolationsdeckschicht entstehenden Sauerstoffüberdrucks führen. Dies gilt umso mehr, je höher die Anwendungstemperatur liegt und kann bereits bei Temperaturen ab 600 °C kritisch werden. Derartige Keramik-Bauelemente mit integrierten Heizleitern finden beispielsweise bei Glühstiftkerzen, bei Lambda-Sonden oder ähnlichen elektrochemischen Meßfühlern, bei beheizten Düsen für verschiedene Anwendungszwecke sowie bei Durchlauferhitzern für Boiler oder Kaffeemaschinen in Form von plättchenförmigen, stiftförmigen oder rohrförmigen Heizern Anwendung.

Aluminiumoxid, wie es in den Handel kommt, enthält normalerweise bis zu 0,5 Gew.-% Natriumoxid und/oder Kaliumoxid. Üblicherweise wird das Aluminiumoxid in dieser Form eingesetzt, insbesondere bei Massenprodukten, weil die reinen Spezifikationen des Aluminiumoxids im Vergleich zu den genannten sehr viel teurer sind.

Aus der FR-A 2 256 121 ist eine Aluminiumoxidkeramik bekannt mit geringen Anteilen an ternärem Flußmittel aus $BaO-MgO-Si_2O$, wobei das gesinterte Keramikmaterial eine sehr kleine Dielektrizitätskonstante sowie einen kleinen dielektrischen Verlustfaktor aufweist. Es ist eine gezielte Zugabe von MgO als Flußmittelkomponente vorgesehen. Kationen leichter Erdalkalimetalle, wie zum Beispiel Magnesium, haben einen relativ kleineren Ionenradius, sind somit beweglicher als schwerere Erdalkalimetallkationen und verschlechtern die elektrochemische Stabilität der Keramik.

Vorteile der Erfindung

Die erfindungsgemäße Verwendung einer Keramik aus Aluminiumoxid mit den kennzeichnenden Merkmalen des Hauptanspruchs hat nun den Vorteil, daß die Keramik bei Temperaturen bis hin zu ≧ 1400 °C bei angelegter Gleichspannung im Dauerbetrieb elektrochemisch stabil ist, das heißt, keine Keramikzersetzung und/oder Heizleiterschädigung durch Kationenwanderung oder Sauerstoffabscheidung zeigt. Damit weisen natürlich die entsprechenden Bauelemente, bei denen eine derartige Keramik Anwendung findet, eine wesentlich längere Lebensdauer auf.

Die Keramik enthält einen Gehalt an Flußmitteln von ≧ 2,5 bis 10 Gew.-%, wobei die Anteile an $Na_2O$, $K_2O$, CaO und MgO unter 1 Gew.-% sind und in dem Flußmittel relativ große und damit schwer bewegliche Ionen, wie Barium enthalten sind, m. a. W. das Flußmittel in Form eines Bariumsilikates vorliegt. Das Mol-Verhältnis $BaO : SiO_2$ liegt zwischen 2:1 und 1:12,5.

Beschreibung eines Ausführungsbeispieles

Zunächst wird die Masseaufbereitung für die beschrieben Keramik die erfindungsgemäß verwendet wird. Die eingewogenen Komponenten werden mit einem Mahlhilfsmittelzusatz von einem Prozent Propandiol in einer Vibratommühle 3 Stunden trocken gemahlen. Daraus wird dann die Preßmasse z. B. durch Gefriertrocknen einer wässrigen Suspension des Mahlguts unter Zusatz organischer Bindemittel hergestellt und in der dann vorgesehenen Weise weiter verarbeitet, für die Beurteilung der elektrochemischen Stabilität beispielsweise, indem eine $Pt/Al_2O_3$-Heizleiterschicht mit $Al_2O_3$-Isolationsdeckschicht auf ein vorgesintertes Bauteil aufgebracht und gesintert wurde. Die Beurteilung der elektrochemischen Stabilität erfolgte, indem durch Erhöhung der Heizspannung eine Prüftemperatur eingestellt wurde und festgestellt wurde, ob der Aufbau bei dieser Prüftemperatur noch elektrochemisch stabil ist, nämlich durch jeweiliges Messen von Widerstand und Durchschlagsfestigkeit von Deckschicht und/oder Heizleiter sowie visuelle Feststellung von Verfärbungen und Rissen. Dabei ergab sich eine Grenztemperatur, bei welcher die untersuchten Schichten nicht mehr stabil waren. Zur Feststellung der Festigkeitswerte wurden aus den Materialien entsprechende Prüfkörper hergestellt.

Beispielhaft wird eine $Al_2O_3$-Keramik mit einem größeren Anteil an Flußmittel und darin enthaltenen relativ schwer beweglichen, weil großen Ionen beschrieben. Diese Keramik weist neben der elektrochemischen Stabilität verbesserte Verarbeitungseigenschaften, insbesondere ein günstigeres Preßverhalten auf. Die beispielhafte Keramik hat die folgende Zusammensetzung: 91,0 Gew.-% $Al_2O_3$; 6,48 Gew.-% BaO und 2,52 Gew.-% $SiO_2$, was einem $BaO:SiO_2$-Verhältnis von 2,6 zu 1 Gewichtsteilen bzw. von 1:1 Molen entspricht. Da Alkaliund CaO- bzw. MgO-Anteile unter einem Gew.-% und Alkalianteile für sich unter 0,2 Gern.-% bleiben sollen, wird ein Aluminiumoxid mit ≧ 99,5 % $Al_2O_3$ eingesetzt. Das Bariumoxid wird in Form von Bariumcarbonat und der $SiO_2$-Anteil zumindest über-

wiegend als Kaolinit oder Halloysit eingebracht, was zu günstigen Herstell- und Preßeigenschaften führt. Die genannten Komponenten werden wie oben beschrieben behandelt und geprüft. Bei Anlegen einer Gleichspannung von 12,5 V zeigte sich diese Keramik im Dauerversuch bei Verwendung sowohl als Stützgerüst für Heizleiter als auch für die Abdeckung des Halbleiters als bis 1400 °C elektrochemisch stabil. Außerdem ist überraschenderweise bei Temperaturen oberhalb 1000 °C eine erhöhte Festigkeit festzustellen, wobei bei 1300 °C immerhin eine Biegefestigkeit von 300 N/mm$^2$ erreicht wird. Der geringe Abfall der Festigkeit bei diesen hohen Temperaturen ist auf eine weitgehende Auskristallisation der Glasphase zurückzuführen. Diese Keramik sintert bereits bei 1525 °C auf ≥ 96 % der theoretischen Dichte (abgeschätzt aus der Phasenanalyse).

## Patentansprüche

1. Verwendung einer Keramik aus Aluminiumoxid mit einem Gehalt an Flußmitteln von 2,5 bis 10 Gew.-/%, wobei die Anteile an $Na_2O$, $K_2O$, CaO und MgO zusammen < als 1 Gew.-/% sind und davon der Gehalt an $Na_2O$ bzw. $K_2O$ je weniger als 0,1 Gew.-/% beträgt, das Flußmittel in Form eines Bariumsilikates vorliegt und das Mol-Verhältnis $BaO:SiO_2$ zwischen 2:1 und 1:12,5 liegt, als Trägerkeramik, keramische Deckschicht und/oder keramisches Stützgerüst für Heizleiter.

2. Verwendung nach Anspruch 1, dadurch gekennzeichnet, daß der Heizleiter mit Gleichspannung beaufschlagt wird.

## Claims

1. Use of a ceramic consisting of aluminium oxide and having a content of fluxes of 2.5 to 10% by weight, the proportions of $Na_2O$, $K_2O$, CaO and MgO being < than 1% by weight in total and the content of $Na_2O$ and $K_2O$ therein being in each case less than 0.1% by weight, the flux being present in the form of a barium silicate and the $BaO:SiO_2$ molar ratio being between 2:1 and 1:12.5, as carrier ceramic, ceramic cover layer and/or ceramic supporting structure for heating conductors.

2. Use according to Claim 1, characterised in that direct voltage is applied to the heating conductor.

## Revendications

1. Utilisation comme céramique porteuse, couche de recouvrement en céramique et/ou ossature de support en céramique pour conducteurs chauffants, d'une céramique en oxyde d'aluminium avec une teneur en fondants de 2,5 à 10 % en poids, tandis que les teneurs en $Na_2O$, $K_2O$, CaO et MgO représentent, conjointement moins de 1 % en poids et que parmi elles la teneur en $Na_2O$ ou bien en $K_2O$ est respectivement inférieure à 0,1 % en poids, le fondant se présentant sous la forme d'un silicate de baryum et le rapport molaire $BaO : SiO_2$ se situant entre 2 : 1 et 1 : 12,5.

2. Utilisation selon la revendication 1, caractérisée en ce que le conducteur chauffant est alimenté avec une tension continue.